# EUROPEAN PATENT APPLICATION

(11) **EP 4 657 547 A1**
(43) Date of publication of application: **03.12.2025**
(21) Application number: 25175054.3
(22) Date of filing: 08.05.2025
(51) Int. Cl.: H01M 4/133, H01M 4/134, H01M 4/36, H01M 4/38, H01M 4/587, H01M 10/0525, H01M 10/0567, H01M 10/0569, H01M 4/02

(54) **ELECTRICITY STORAGE DEVICE**

(30) Priority: 30.05.2024 JP 2024088019
(71) Applicant: Prime Planet Energy & Solutions, Inc., Chuo-ku, Tokyo 103-0022 (JP)
(72) Inventor: TAKESHITA, Shuhei, Tokyo, 103-0022 (JP)
(74) Representative: Kuhnen & Wacker Patent- und Rechtsanwaltsbüro PartG mbB

(57) **Abstract**

Provided is a technique to suppresses an increase in a resistance under a low temperature environment. The electricity storage device(100) disclosed herein includes a positive electrode (50), a negative electrode (60), and a nonaqueous electrolytic solution (80). The negative electrode (60) contains a silicon-containing graphite particle as the negative electrode active material, which is a graphite particle containing the silicon. The nonaqueous electrolytic solution (80) contains EC, DMC, EMC, carboxylic acid ester whose carbon number is equal to or less than 4, and FEC, as the nonaqueous solvent. With a sum of the EC, the DMC, the EMC, and the carboxylic acid ester being 100 volume%, a volume of the carboxylic acid ester is 1 volume% to 30 volume%. A content amount of the FEC with respect to a whole of the nonaqueous solvent is 0.1 mass% to 5 mass%.

## Description

### BACKGROUND OF THE DISCLOSURE

### 1. Technical Field

The present disclosure relates to an electricity storage device.

### 2. Background

As an example of the electricity storage device, it is possible to mention about a secondary battery, such as lithium ion secondary battery. Recently, this type of secondary battery is suitably used in a portable power supply for a personal computer, a portable terminal, or the like, a power supply for driving automobiles, such as electric vehicle (BEV), hybrid vehicle (HEV), and plug-in hybrid vehicle (PHEV), or the like.

Japanese Patent Application Publication No. 2017-50142 discloses a negative electrode active material which is used for a lithium ion secondary battery. This negative electrode active material includes scaly graphite substances and a scaly silicon particle whose surface is coated with a carbon. The scaly graphite substances aggregate so as to form a particle shape. The silicon particle is present between the scaly graphite substances. This Japanese Patent Application Publication describes that, by the configuration described above, it is possible to provide the negative electrode active material for the lithium ion secondary battery having a high capacity and having a long life.

Regarding a secondary battery disclosed by Japanese Patent Application Publication No. 2019-179724, a negative electrode includes a negative electrode current collector and a negative electrode active material layer that is formed on the negative electrode current collector. The negative electrode active material layer contains a carbon material and a silicon chemical compound containing a silicon atom. A nonaqueous solvent contains fluoroethylene carbonate at a content rate being equal to or more than 10 volume%. A mass M1 of the silicon chemical compound at a lower layer portion is larger than a mass M2 of the silicon chemical compound at an upper layer portion, in a situation where an opposed surface of the negative electrode active material layer being opposed to the negative electrode current collector is treated as a first surface, where a back surface of the first surface is treated as a second surface, where a layer thickness of the negative electrode active material layer is treated as T, where an area from the first surface of the negative electrode active material layer to a 0.5 T depth is treated as the lower layer portion, and where an area from the second surface of the negative electrode active material layer to the 0.5 T depth is treated as the upper layer portion. This Japanese Patent Application Publication describes that, by the configuration described above, it is possible to suppress a reduction in the capacity even when a fast electrical charge is performed.

### SUMMARY

The present inventor thinks, regarding the electricity storage device in which the particle containing the silicon is used as the negative electrode active material, to implement better suppressing an increase in the resistance under a low temperature environment.

According to a herein disclosed technique, it is possible to provide an electricity storage device which includes a positive electrode, a negative electrode, and a nonaqueous electrolytic solution. The negative electrode contains a silicon-containing graphite particle as a negative electrode active material, the silicon-containing graphite particle being a graphite particle that contains silicon. The nonaqueous electrolytic solution contains an ethylene carbonate, a dimethyl carbonate, an ethyl methyl carbonate, a carboxylic acid ester whose carbon number is equal to or less than 4, and a fluoroethylene carbonate, as the nonaqueous solvent. With a sum of the ethylene carbonate, the dimethyl carbonate, the ethyl methyl carbonate, and the carboxylic acid ester being 100 volume%, a volume rate of the carboxylic acid ester is 1 volume% to 30 volume%. A content amount of the fluoroethylene carbonate with respect to a whole of the nonaqueous solvent is 0.1 mass% to 5 mass%.

In accordance with such a configuration, regarding the electricity storage device in which the particle containing the silicon is used as the negative electrode active material, it is possible to better suppress the increase in the resistance under the low temperature environment.

### BRIEF DESCRIPTION OF THE DRAWINGS

FIG. 1 is a schematic cross section view of a lithium ion secondary battery 100.
FIG. 2 is a schematic view of an electrode assembly 20.

### DESCRIPTION OF THE EMBODIMENTS

Below, one embodiment of the herein disclosed electricity storage device will be explained. The embodiment explained herein is not to particularly restrict the herein disclosed technique. The herein disclosed technique is not restricted to the embodiment explained herein, unless specifically mentioned. Drawings are schematically illustrated, and thus are not to always reflect actual things. The members/parts providing the same effect are suitably provided with the same numerals, and signs and overlapping explanations might be omitted. A wording "A to B" representing a numerical range not only means "equal to or more than A and not more than B" unless specifically mentioned, but also semantically covers a meaning of "more than A and less than B".

In the present specification, a term "electricity storage device" represents a device in which an electric charge and an electric discharge are generated in response to movement of a charge carrier between a pair of electrodes (a positive electrode and a negative electrode) through an electrolyte. The electricity storage device semantically covers a secondary battery, such as lithium ion secondary battery; and a capacitor, such as lithium ion capacitor and electric double layer capacitor. Below, an embodiment in which the electricity storage device is the lithium ion secondary battery will be described.

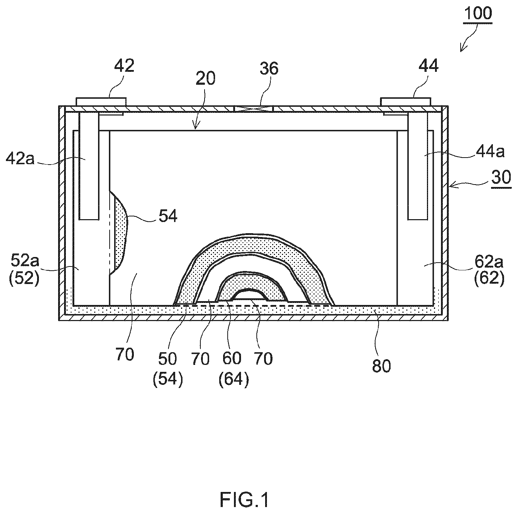

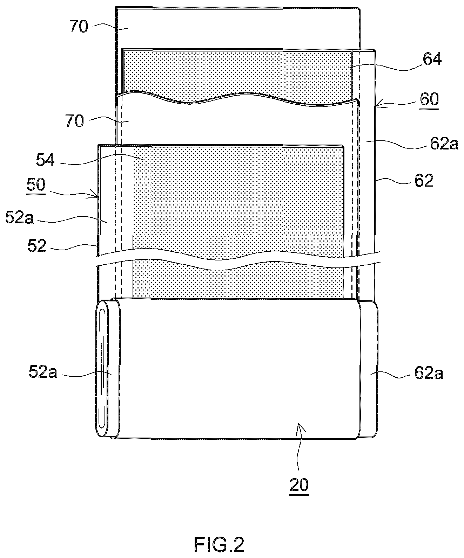

FIG. 1 is a schematic cross section view of the lithium ion secondary battery 100. FIG. 2 is a schematic view of an electrode assembly 20. As shown by FIG. 1, the lithium ion secondary battery 100 includes the electrode assembly 20, a case 30, and a nonaqueous electrolytic solution 80.

As shown by FIG. 1 and FIG. 2, the electrode assembly 20 is a wound electrode assembly in which a positive electrode 50 formed in a long sheet shape and a negative electrode 60 formed in a long sheet shape are superimposed via a separator 70 formed in a long sheet shape and then wound in a sheet longitudinal direction (below, simply referred to as "longitudinal direction", too). In the electrode assembly 20, an exposed area 52a of the positive electrode 50 and an exposed area 62a of the negative electrode 60 respectively protrude outwardly from both ends in a shorter direction orthogonal to the longitudinal direction.

As shown by FIG. 1 and FIG. 2, the positive electrode 50 includes a positive electrode current collector 52 formed in a long sheet shape and includes a positive electrode active material layer 54. The positive electrode current collector 52 is, for example, an aluminum foil. In this embodiment, the positive electrode current collector 52 includes an area in which a positive electrode active material layer 54 is provided, and includes the exposed area 52a in which the positive electrode active material layer 54 is not provided and thus a surface of the positive electrode current collector 52 is exposed. The positive electrode active material layer 54 is, for example, provided on one surface or both surfaces (here, on both surfaces) of the positive electrode current collector 52 along the longitudinal direction in a strip-like shape. The positive electrode active material layer 54 is not provided at an end part (in the drawings, an end part at a left side) in a sheet shorter direction (below, simply referred to as "shorter direction", too). The exposed area 52a herein is a strip-like area at the end part in the shorter direction (in the drawings, the end part at the left side) of the shorter direction. As shown by FIG. 1, on the exposed area 52a, an electrical collector plate 42a is attached.

The positive electrode active material layer 54 contains, for example, a positive electrode active material. The positive electrode active material is not particularly restricted when an effect of the herein disclosed technique is implemented, and the positive electrode active material having a conventionally known composition and being used for this kind of purpose can be used. It is good that the positive electrode active material is, for example, a lithium composite oxide, a lithium transition metal phosphate compound, or the like. A crystal structure of the positive electrode active material, which is not particularly restricted, might be a layer-shape structure, a spinel structure, an olivine structure, or the like.

Regarding the lithium composite oxide, it is preferable to use a lithium-transition metal complex oxide which contains at least 1 kind among Ni, Co, and Mn as a transition metal element. As the lithium-transition metal complex oxide, it is possible to use, for example, a lithium-nickel base composite oxide, a lithium-cobalt base composite oxide, a lithium-manganese base composite oxide, a lithium-nickel-manganese base composite oxide, a lithium-nickel-cobalt-manganese base composite oxide, a lithium-nickel-cobalt-aluminum base composite oxide, a lithium-iron-nickel-manganese base composite oxide, or the like. Of these positive electrode active materials, 1 kind might be used singly, or 2 or more kinds might be combined and then used.

Incidentally, "lithium-nickel-cobalt-manganese base composite oxide" in the present specification is a term that semantically covers not only an oxide whose constituent elements are Li, Ni, Co, Mn, and O, but also an oxide containing 1 kind or 2 or more kinds of additive elements other than them. As the additive elements, it is possible to select, for example, a transition metal element, a typical metal element, or the like, such as Mg, Ca, Al, Ti, V, Cr, Y, Zr, Nb, Mo, Hf, Ta, W, Na, Fe, Zn, and Sn. The additive element might be a semimetal element, such as B, C, Si, and P, or a non-metal element, such as S, F, Cl, Br, and I. This can be said to the lithium-nickel base composite oxide, the lithium-cobalt base composite oxide, the lithium-manganese base composite oxide, the lithium-nickel-manganese base composite oxide, the lithium-nickel-cobalt-aluminum base composite oxide, the lithium-iron-nickel-manganese base composite oxide, and the like.

As the lithium transition metal phosphate compound, it is possible to use, for example, lithium iron phosphate (LiFePO₄), lithium manganese phosphate (LiMnPO₄), lithium manganese iron phosphate, or the like. As the positive electrode active material, it is possible to preferably use, for example, LiNi_{0.33}Co_{0.33}Mn_{0.33}O₂, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNiO₂, LiCoO₂, LiFeO₂, LiMn₂O₄, LiNi_{0.5}Mn_{1.5}O₄, or the like.

The positive electrode active material layer 54 might contain not only the positive electrode active material, but also an electrically conducting material, a binder, or the like. As the electrically conducting material, it is possible to use, for example, a carbon black, such as acetylene black (AB); or the other carbon material, such as graphite. As the binder, it is possible to use, for example, polyvinylidene fluoride (PVDF), or the like. A content amount of the positive electrode active material with respect to the whole of the positive electrode active material layer 54 is, for example, preferably equal to or more than 70 mass%, further preferably 80 mass% to 98 mass%, or furthermore preferably 85 mass% to 95 mass%. A content amount of the electrically conducting material with respect to the whole of the positive electrode active material layer 54 is, for example, 0.1 mass% to 20 mass%. A content amount of the binder with respect to the whole of the positive electrode active material layer 54 is, for example, 0.5 mass% to 15 mass%.

As shown by FIG. 1 and FIG. 2, the negative electrode 60 includes a negative electrode current collector 62 formed in a long sheet and includes a negative electrode active material layer 64. The negative electrode current collector 62 is, for example, a copper foil. In this embodiment, the negative electrode current collector 62 includes an area on which the negative electrode active material layer 64 is provided and includes the exposed area 62a on which the negative electrode active material layer 64 is not provided and thus a surface of the negative electrode active material layer 64 is exposed. The negative electrode active material layer 64 is, for example, provided on one surface or both surfaces (here, on both surfaces) of the negative electrode current collector 62 along the longitudinal direction in a strip-like shape. The negative electrode active material layer 64 is not provided at an end part (in the drawings, an end part positioned at a right side) in the shorter direction. The exposed area 62a herein is a strip-like area at the end part (in the drawings, the end part positioned at the right side) in the shorter direction. As shown by FIG. 1, on the exposed area 62a, an electrical collector plate 44a is attached.

The negative electrode active material layer 64 contains, for example, a negative electrode active material. In this embodiment, the negative electrode active material contains a silicon-containing graphite particle. It is good that the silicon-containing graphite particle is, for example, a graphite particle containing a silicon-containing particle at the inside. In this situation, the silicon-containing graphite particle could, for example, contain the graphite particle including a void and contain a silicon-containing particle being arranged at an inside of the void. The graphite particle including the void could function as a base material particle of the silicon-containing particle. Although not particularly restricting, from a perspective of containing more silicon-containing particles and implementing to make the lithium ion secondary battery 100 have a high capacity, a high energy density, or the like, it is preferable that the graphite particle including the void is a porous graphite particle. Alternatively, in another embodiment, the graphite particle including the void might be an aggregate of scaly graphite.

A average particle diameter of the silicon-containing graphite particle is approximately 0.1 µm to 20 µm. From a perspective of implementing the effect of the herein disclosed technique, the average particle diameter is, for example, equal to or more than 0.3 µm, preferably equal to or more than 0.5 µm, further preferably equal to or more than 1 µm, or furthermore preferably equal to or more than 2 µm. From a perspective of enhancing a filling rate in the negative electrode active material layer 64, the average particle diameter is, for example, equal to or less than 15 µm, preferably equal to or less than 10 µm, or further preferably equal to or less than 5 µm. In the present specification, the wording "average particle diameter" of the particle means a particle diameter (a D₅₀ particle diameter) corresponding to an accumulation 50% from a fine particle side, regarding a particle size distribution on a volume basis measured by a particle size distribution measurement based on a laser-diffraction/light-scattering method. Incidentally, the average particle diameter of the silicon-containing graphite particle might be, for example, similar to the average particle diameter of the above described graphite particle including the void.

The silicon-containing particle contained in the silicon-containing graphite particle is, for example, a particle containing the silicon, and it is good if the silicon-containing particle is a particle configured to function as the negative electrode active material. The silicon-containing particle might be, for example, a silicon particle, or might be a silicon oxide particle. In this embodiment, the particle diameter of the silicon-containing particle is equal to or less than 1 µm. Although not particularly restricting, from a perspective that the graphite particle contains more silicon-containing particles at the inside (for example, in the void of the graphite particle), the particle diameter of the silicon-containing particle is equal to or less than approximately 500 nm, for example, equal to or less than 250 nm, preferably equal to or less than 150 nm, further preferably equal to or less than 100 nm, or furthermore preferably equal to or less than 50 nm. From a similar perspective, the particle diameter of the silicon-containing particle is, for example, equal to or more than 1 nm, preferably equal to or more than 3 nm, further preferably equal to or more than 5 nm, or furthermore preferably equal to or more than 10 nm. Incidentally, the particle diameter of the silicon-containing particle can be obtained, for example, by obtaining a planar surface SEM observation image of the silicon-containing particle, selecting the silicon-containing particles (for example, 10 to 100 particles) at random from the SEM observation image, calculating each of particle diameters (equivalent circle diameters), and then calculating an arithmetic average value of them. Alternatively, it is possible to use a nominal value of a manufacturer, or the like.

The silicon-containing graphite particle can be obtained according to a known method. For example, it can be obtained by mixing the silicon-containing particle and a carbon precursor (for example, a petroleum pitch, a coal pitch, a phenolic resin, or the like), carbonizing the mixture, and then performing a spheroidization process. Alternatively, it can be obtained by mixing a graphite base material granulated in a spherical shape and the silicon-containing particle in a dispersion medium, drying the mixture, and thus arranging the silicon-containing particle in the void of the graphite particle being as the base material.

In this embodiment, the negative electrode active material further contains another graphite particle being different from the silicon-containing graphite particle (below, simply referred to as "another graphite particle", too). Said another graphite particle is, for example, a graphite particle in which the silicon is substantially not contained (preferably, a graphite particle in which no silicon is contained). Regarding said another graphite particle, the wording "the silicon is substantially not contained" represents that a content rate of the silicon in said another graphite particle is equal to or less than 1 mass%, preferably equal to or less than 0.5 mass%, or further preferably equal to or less than 0.3 mass%. The content rate of the silicon can be calculated, for example, by a conventionally known method, such as ICP analysis. It is good that said another graphite particle is, for example, artificial graphite, natural graphite, or the like. Said another graphite particle might include a coating layer of an amorphous carbon at the surface. Although not particularly restricting, said another graphite particle is, for example, formed in an approximately spherical shape. In the present specification, regarding said another graphite particle, the wording "approximately spherical shape" represents that a mean aspect ratio based on an electron microscope (SEM) observation of said another graphite particle is 1 to 2 (preferably, 1 to 1.5). Incidentally, the mean aspect ratio is obtained, for example, by obtaining a planar surface SEM observation image of said another graphite particle, selecting graphite particles (for example, 10 to 100 graphite particles) randomly from the SEM observation image, calculating each of aspect ratios, and calculating an arithmetic average value of them. A average particle diameter of said another graphite particle is, for example, sufficiently 5 µm to 30 µm, or might be 15 µm to 25 µm.

Although not particularly restricting, from a perspective of implementing the high capacity and the high energy density of the lithium ion secondary battery 100, the negative electrode active material layer 64 contains the silicon-containing graphite particle that is, for example, sufficiently equal to or more than 0.3 mass%, preferably equal to or more than 0.5 mass%, further preferably equal to or more than 1 mass%, or furthermore preferable equal to or more than 1.5 mass%, with a sum of the silicon-containing graphite particle and the graphite particle being 100 mass%. In contrary, from a perspective of suppressing an expansion and a contraction of the negative electrode 60 according to the electric charge and the electric discharge, the negative electrode active material layer 64 contains the silicon-containing graphite particle that is sufficiently equal to or less than approximately 20 mass%, for example, sufficiently equal to or less than 10 mass%, preferably equal to or less than 7.5 mass%, or further preferably equal to or less than 5 mass%, with the sum of the silicon-containing graphite particle and the graphite particle being 100 mass%.

The negative electrode active material layer 64 might contain an electrically conducting material, in addition to the negative electrode active material. As the electrically conducting material, it is good to use, for example, a carbon black, such as acetylene black (AB); a carbon nanotube, such as single-walled carbon nanotube (SWCNT), double-walled carbon nanotube (DWCNT), and multi-walled carbon nanotube (MWCNT); a carbon fiber; or the like.

A rate of the negative electrode active material with respect to a whole of the negative electrode active material layer 64 is, for example, equal to or more than 70 mass%, preferably equal to or more than 80 mass%, or further preferably 85 mass% to 99 mass%, or might be 90 mass% to 95 mass%. It is good that a rate of the electrically conducting material with respect to the whole of the negative electrode active material layer 64 is, for example, 0.01 mass% to 3 mass%.

The negative electrode active material layer 64 might contain a binder, in addition to the negative electrode active material. As the binder, for example, it is possible to use carboxymethyl cellulose (CMC), polyacrylic acid (PAA), styrene butadiene rubber (SBR), polyvinylidene fluoride (PVDF), or the like. Among them, the carboxymethyl cellulose (CMC) and the styrene butadiene rubber (SBR) can be preferably used. It is good that a rate of the binder is, for example, 0.5 mass% to 10 mass% with the whole of the negative electrode active material layer 64 being 100 mass%.

As the separator 70, it is possible to use, for example, a porous sheet (a film) made from a resin material, such as polyethylene (PE), polypropylene (PP), polyester, cellulose, and polyamide. The porous sheet might be configured with a single layer structure, or might be configured with a laminate structure consisting of two or more layers (for example, a three layers structure in which PP layers are laminated on both surfaces of a PE layer). On a surface of the separator 70, a heat resistance layer (HRL) might be provided.

The case 30 is, for example, an outer container that is configured to accommodate the electrode assembly 20 and the nonaqueous electrolytic solution 80. The case 30 herein is a flat case formed in a square shape. As shown by FIG. 1, the case 30 includes a positive electrode terminal 42, a negative electrode terminal 44, a safe valve 36, and a liquid injection hole (not shown in drawings). The positive electrode terminal 42 is, for example, a terminal for outside connection at a positive electrode side. The positive electrode terminal 42 herein is electrically connected to the positive electrode 50 of the electrode assembly 20 via the electrical collector plate 42a. The negative electrode terminal 44 is, for example, a terminal for outside connection at a negative electrode side. The negative electrode terminal 44 herein is electrically connected to the negative electrode 60 of the electrode assembly 20 via the electrical collector plate 44a. The safe valve 36 is, for example, a thin-walled part that is set to release an internal pressure of the case 30 when the internal pressure is increased to a level equal to or more than a predetermined level. The liquid injection hole is, for example, a portion that is configured to inject the nonaqueous electrolytic solution 80 into the case 30.

By making the silicon be contained in the negative electrode, it is possible to implement the higher capacity, the higher energy density of the electricity storage device, or the like. In contrary, in the negative electrode containing the silicon, the expansion and the contraction according to the electric charge and the electric discharge of the electricity storage device is larger. In order to reduce the expansion and the contraction, for example, silicon whose particle diameter is smaller is used. However, if the silicon whose particle diameter is smaller is used, there is a possibility that the silicon particle and the other silicon particle aggregate in the negative electrode. If the above described aggregate occurs, for example, a void between the silicon particle and another silicon particle becomes smaller and thus it becomes more difficult to induce contact of the silicon particle with the electrolytic solution. If so, for example, a formation of a SEI coating layer on the silicon particle becomes insufficient, and thus there are some fears of reducing an output characteristic under the low temperature environment, a durability performance of the electricity storage device, or the like. Then, the present inventor examined about a composition of the nonaqueous electrolytic solution.

The nonaqueous electrolytic solution 80 contains, for example, a nonaqueous solvent and a supporting salt. The nonaqueous solvent herein contains ethylene carbonate (EC), dimethyl carbonate (DMC), ethyl methyl carbonate (EMC), carboxylic acid ester whose carbon number is equal to or less than 4, and fluoroethylene carbonate (FEC).

Regarding the carboxylic acid ester, for example, the carbon number is equal to or less than 4, and the carboxylic acid ester is not particularly restricted if the effect of the herein disclosed technique can be implemented. As the carboxylic acid ester, it is possible to preferably use, for example, the carboxylic acid ester whose viscosity is lower than the EC, the DMC, and the EMC. As the carboxylic acid ester, for example, it is possible to use methyl acetate, ethyl acetate, methyl propanoate, or the like. As the carboxylic acid ester, a single one among the above described kinds might be used alone, or two or more kinds of them might be mixed and then used. In the nonaqueous electrolytic solution 80 of this embodiment, a volume of the carboxylic acid ester is 1 volume% to 30 volume% with a sum of the EC, the DMC, the EMC, and the carboxylic acid ester being 100 volume%.

In this embodiment, the FEC represents a chemical compound in which hydrogen (H) atoms of the EC are partially replaced with fluorine (F) atoms. Regarding the FEC, a kind of the FEC is not restricted if it can implement the effect of the herein disclosed technique. As the FEC, it is possible to preferably use, for example, 4-fluoroethylene carbonate; a difluoroethylene carbonate, such as 4,4-difluoroethylene carbonate and 4,5-difluoroethylene carbonate; 4,4,5-trifluoroethylene carbonate; 4,4,5,5-tetrafluoroethylene carbonate; or the like. Among them, it is preferable as the FEC to use the 4-fluoroethylene carbonate. As the FEC, a single one among the above described kinds might be used alone, or two or more kinds of them might be mixed and then used.

In this embodiment, regarding the nonaqueous electrolytic solution 80, a content amount of the FEC with respect to a whole of the nonaqueous solvent is from 0.1 mass% to not more than 5 mass%. In the herein disclosed technique, the FEC functions, for example, as a coating layer forming agent. From a perspective of better implementing the above described function, the content amount of the FEC with respect to the whole of the nonaqueous solvent is, for example, equal to or more than 0.3 mass%, preferably equal to or more than 0.5 mass%, further preferably equal to or more than 1 mass%, or furthermore preferably equal to or more than 2 mass%. In contrary, from a perspective of suppressing an increase in a resistance due to a formation of the coating layer or from a perspective of suppressing a gas generation, the content amount of the FEC with respect to the whole of the nonaqueous solvent is preferably equal to or less than 4.5 mass%, or further preferably equal to or less than 4 mass%.

From a perspective of enhancing a stability of the nonaqueous electrolytic solution 80 or from a perspective of implementing the electric charge and the electric discharge being further stable, a volume rate of a sum of the EC and the DMC is preferably equal to or more than 50 volume% or further preferably equal to or more than 55 volume% with a sum of the EC, the DMC, the EMC, and the carboxylic acid ester being 100 volume%. From a perspective of containing a sufficient component to implement the effect of the herein disclosed technique, the above described volume rate of the sum of the EC and the DMC is, for example, equal to or less than 90 volume%, preferably equal to or less than 80 volume%, or further preferably equal to or less than 70 volume%. From a perspective of imparting an appropriate viscosity to the nonaqueous electrolytic solution 80, a volume rate of the EMC is, for example, 5 volume% to 45 volume%, or preferably 10 volume% to 40 volume%, with the sum of the EC, the DMC, the EMC, and the carboxylic acid ester being 100 volume%.

The nonaqueous solvent might contain another organic solvent, such as various carbonates, ethers, esters, nitriles, sulfones, and lactones that are used for this kind of purpose, in addition to the above described components, insofar as it is possible to implement the effect of the herein disclosed technique. In this situation, a volume rate of said another organic solvent with respect to the whole of the nonaqueous solvent is equal to or less than approximately 20 volume%, for example, 10 volume%, preferably equal to or less than 5 volume%, further preferably equal to or less than 3 volume%, or furthermore preferably equal to or less than 1 volume%, or it is better to be closer to 0 volume%. The nonaqueous electrolytic solution 80 might contain the supporting salt, additionally. As the supporting salt, for example, it is possible to use a lithium salt, such as LiPF₆, LiBF₄, and LiClO₄. It is good that a concentration of the supporting salt is, for example, 0.7 mol/L to 1.4 mol/L. The nonaqueous electrolytic solution 80 might contain an additive agent, which is used for this kind of purpose, as needed. As the additive agent, it is possible to contain, for example, a coating layer forming agent, such as LiB(C₂O₄)₂(LiBOB) and LiBF₂(C₂O₄); a gas generating agent, such as biphenyl (BP) and cyclohexyl benzene (CHB); a thickening agent; or the like.

The lithium ion secondary battery 100 can be used for various purposes. As a suitable purpose, it is possible to select a power supply for driving which is mounted on a vehicle, such as battery electric vehicle (BEV), hybrid electric vehicle (HEV), and plug-in hybrid electric vehicle (PHEV). The lithium ion secondary battery 100 can be used, for example, as a storage battery of a small electric power storage apparatus, or the like. The lithium ion secondary battery 100 can be used, for example, in a form of a battery pack configured by connecting the lithium ion secondary batteries in series and/or in parallel.

As described above, the lithium ion secondary battery 100 is an electricity storage device that includes the positive electrode 50, the negative electrode 60, and the nonaqueous electrolytic solution 80. The negative electrode 60 contains the silicon-containing graphite particle as the negative electrode active material, which is a graphite particle containing the silicon. The nonaqueous electrolytic solution contains the EC, the DMC, the EMC, the carboxylic acid ester whose carbon number is equal to or less than 4, and the FEC, as the nonaqueous solvent. A volume rate of the carboxylic acid ester is 1 volume% to 30 volume% with a sum of the EC, the DMC, the EMC, and the carboxylic acid ester being 100 volume%. A content amount of the FEC with respect to the whole of the nonaqueous solvent is 0.1 mass% to 5 mass%.

In the lithium ion secondary battery 100, the negative electrode 60 contains the silicon-containing graphite particle as the negative electrode active material, and thus the high capacity and the high energy density are implemented. By making the nonaqueous electrolytic solution 80 contain the EC, the DMC, and the EMC as the nonaqueous solvent, the stable electric charge and the stable electric discharge are implemented. By making the nonaqueous electrolytic solution 80 contain the carboxylic acid ester whose carbon number is equal to or less than 4 as the nonaqueous solvent, it is possible to reduce the viscosity of the nonaqueous electrolytic solution 80. Thus, it is possible to make the nonaqueous electrolytic solution 80 better come into contact with the silicon component and the graphite component which are contained in the silicon-containing graphite particle. The nonaqueous electrolytic solution 80 further contains the FEC as the nonaqueous solvent. The FEC functions, for example, as the coating layer forming agent for forming the SEI coating layer. Thus, by making the nonaqueous electrolytic solution 80 contain the FEC, it is possible to further efficiently form the SEI coating layer for the negative electrode active material. Here, in the lithium ion secondary battery 100, a volume of the carboxylic acid ester is set to be 1 volume% to 30 volume% and a content amount of the FEC with respect to the whole of the nonaqueous solvent is set to be 0.1 mass% to 5 mass%, with the sum of the EC, the DMC, the EMC, and the carboxylic acid ester being 100 volume%. By this, even under the low temperature environment, it is possible to properly reduce the viscosity of the nonaqueous electrolytic solution 80, and to make the nonaqueous electrolytic solution 80 sufficiently come into contact with the silicon component and the graphite component of the negative electrode active material. Thus, it is possible to suppress the increase in the resistance under the low temperature environment. Further, it is possible to efficiently form the SEI coating layer. Therefore, it is possible to suppress the reduction in a capacity maintenance rate caused by the electric charge and electric discharge cycle.

The carboxylic acid ester might be at least one of the methyl acetate and the methyl propanoate. By this, it is possible to better implement the effect of the herein disclosed technique.

With the sum of the EC, the DMC, the EMC, and the carboxylic acid ester being 100 volume%, a volume rate of a sum of the EC and the DMC might be 50 volume%. A volume rate of the EMC might be 10 volume% to 40 volume%. By this, it is possible not only to make the electric charge and the electric discharge of the lithium ion secondary battery 100 be stable, but also to enhance the durability performance of the lithium ion secondary battery 100.

The silicon-containing graphite particle might be configured with the graphite particle including the void and a silicon-containing particle arranged in the void. Since the graphite particle includes the void, it is possible to relieve the expansion and the contraction of the silicon-containing particle caused by the electric charge and the electric discharge of the lithium ion secondary battery 100. By this, it is possible to better implement the effect of the herein disclosed technique.

A particle diameter of the silicon-containing particle might be equal to or less than 1 µm. By this, it is possible to make the content rate of the silicon-containing particle with respect to the silicon-containing graphite particle be larger. Thus, it is possible to implement the high output, while the electrically conductive property of the negative electrode active material is made to be enhanced. In addition to this, by the configuration described above, it is possible to increase a contactable area size of the silicon-containing particle and the nonaqueous electrolytic solution 80. By this, it is possible to better implement the effect of the herein disclosed technique.

The lithium ion secondary battery 100 might further contain a graphite particle in which the silicon is substantially not contained, as the negative electrode active material. By this, it is possible to enhance the electrically conductive property of the negative electrode active material layer 64.

Below, a test example related to the herein disclosed technique will be explained, but it is not intended to restrict the herein disclosed technique into the below-described test example.

### [Manufacture of test cell]

### <Practical example 1 to Practical example 6, Comparative example 1, and Comparative example 2>

As the positive electrode active material, LiNi_{1/3}Co_{1/3}Mn_{1/3}O₂ (LNCM) was prepared, as the electrically conducting material, the acetylene black (AB) was prepared, and as the binder, the polyvinylidene fluoride (PVdF) was prepared. These were mixed to N-methylpyrrolidone (NMP) being as the solvent to satisfy a mass ratio of LNCM : AB : PVdF = 92 : 5: 3, and the mixture was kneaded with a stirring granulator, so as to manufacture a positive electrode slurry. The positive electrode slurry was applied to coat both surfaces of the aluminum foil whose thickness was 15 µm, and then the resultant was dried and pressed to have a predetermined thickness, so as to obtain the positive electrode that was processed to have a predetermined size.

As the negative electrode active material, the graphite particle (the graphite particle in which the silicon is substantially not contained) and the silicon-containing graphite particle were prepared. A average particle diameter of the graphite particle was 22 µm. The silicon-containing graphite particle was a particle whose average particle diameter was 3 µm and which was configured with the graphite particle containing the void and with the silicon particle arranged in the void. A particle diameter of the silicon particle was 30 nm. As the electrically conducting material, the acetylene black (AB) was prepared. As the binder, the carboxymethyl cellulose (CMC) and the styrene butadiene rubber (SBR) were prepared. The materials being prepared and water being a dispersion medium were kneaded with a mixing machine, so as to manufacture a negative electrode slurry. The negative electrode slurry was prepared to satisfy a mass ratio of graphite particle / silicon-containing graphite particle / AB / CMC / SBR = 93: 2: 1: 1: 3. The negative electrode slurry was applied to coat both surfaces of the copper foil whose thickness was 10 µm, and the resultant was dried and then pressed to have a predetermined thickness, so as to obtain the negative electrode that was processed to have a predetermined size.

As the separator, one in which the heat resistance layer (thickness: 4 µm) was provided on the porous polyolefin sheet (thickness: 20 µm) configured with a three layers structure of PP/PE/PP was prepared. A lead was attached to each of the positive electrode and the negative electrode, each electrode was laminated through the separator, so that the electrode assembly was manufactured. The electrode assembly was inserted into an outer case of an aluminum laminate sheet, the nonaqueous electrolytic solution was injected, and an opening of the outer case was sealed, so that a test cell for each example was manufactured. A composition of the nonaqueous electrolytic solution was as shown in an applicable column of Table 1. The FEC was the 4-fluoroethylene carbonate. Into the nonaqueous electrolytic solution, the LiPF₆ being as the supporting salt was dissolved at 1 mol/L concentration. Incidentally, "-" shown in Table 1 represents that the corresponding component is not contained. In Table 1, "MA" means methyl acetate. In Table 1, "MP" means methyl propanoate.

### [Table 1]

**Table 1**

| | Volume rate (volume%)* | | | | | FEC (ms%)** |
|---|---|---|---|---|---|---|
| | EC | DMC | EMC | MA | MP | |
| Practical example 1 | 30 | 30 | 39 | 1 | - | 3 |
| Practical example 2 | 30 | 30 | 37 | 3 | - | 3 |
| Practical example 3 | 30 | 30 | 34 | 6 | - | 3 |
| Practical example 4 | 30 | 30 | 25 | 15 | - | 3 |
| Practical example 5 | 30 | 30 | 10 | 30 | - | 3 |
| Practical example 6 | 30 | 30 | 37 | - | 3 | 3 |
| Comparative example 1 | 30 | 30 | 40 | - | - | 3 |
| Comparative example 2 | 30 | 30 | 37 | 3 | - | 10 |

| | | | | | | |
|---|---|---|---|---|---|---|
| * Volume rate with a sum of EC, DMC, EMC, and carboxylic acid ester being 100 volume% ** Content amount (mass%) with respect to whole of nonaqueous solvent | | | | | | |

### [Measurement of initial capacity]

One cycle of the electric charge and electric discharge cycle was performed under 25°C environment on the test cell, in which a constant current charge (a CC charge) was performed at 0.05C electrically charging rate until a voltage between the positive electrode and the negative electrode became 4.2 V and then a constant current discharge (a CC discharge) was performed at 0.05C electrically discharging rate until the voltage between the positive electrode and the negative electrode became 2.5 V. The electric discharge capacity at that time was measured, and then it was treated as an initial capacity.

### [Low temperature resistance evaluation]

The initial capacity obtained as described above was treated as the SOC 100%, and then the test cell was adjusted to be SOC 50% in a thermostatic chamber at 25°C. The test cell being in this state was moved into a thermostatic chamber at -10°C, then the electric discharge was performed at 1 C, 1.5 C, 2 C, or 3 C current value for 10 seconds, and the battery voltage in each situation was measured. Each current value and each battery voltage were plotted, so that a I-V characteristic at the electrically discharging time was obtained. Then, based on a slope of the obtained straight line, an IV resistance at the electrically discharging time was calculated. A ratio of each example was calculated in a situation where the comparative example 1 was treated as 100%. Results are shown in applicable columns of Table 2.

### [Cycle characteristic evaluation]

The CC charge at 0.33 C was performed on the test cell in the thermostatic chamber at 25°C until it reached to be 4.14 V, then the CV charge was performed until the current value reached to be 0.1 C, and it was treated as a fully charged state. Next, the CC discharge was performed at 0.33 C until it reached to be 3 V. This was treated as 1 cycle, and then the electric charges and the electric discharges were performed for 200 cycles. Then, the capacity maintenance rate of the test cell of each example was calculated after the 200 cycle, based on below described Formula (X): Capacity maintenance rate (%) = (electric discharge capacity after 200 cycles / initial capacity) x 100 (X)

The results are shown in applicable columns of Table 2.

### [Gas generation rate evaluation]

By an Archimedes method, a volume of the test cell of each example was measured. In particular, the test cell was immersed in 25°C water, and then the volume of the test cell was measured on the basis of change in mass. The volume measurement was performed before and after the cycle test, and the gas generation rate caused by the electric charges and the electric discharges for 200 cycles was calculated for the test cell of each example, based on below described Formula (Y): Gas generation rate (%) = [{(volume after 200 cycles) - (initial volume)} / (initial volume)] x 100 (Y)

The results are shown in applicable columns of Table 2.

### [Table 2]

**Table 2**

| | Low temperature resistance (%) | Capacity maintenance rate (%) | Gas generation rate (%) |
|---|---|---|---|
| Practical example 1 | 90 | 70 | 35 |
| Practical example 2 | 88 | 71 | 35 |
| Practical example 3 | 86 | 73 | 35 |
| Practical example 4 | 83 | 74 | 35 |
| Practical example 5 | 81 | 76 | 35 |
| Practical example 6 | 89 | 71 | 35 |
| Comparative example 1 | 100 | 63 | 35 |
| Comparative example 2 | 101 | 72 | 42 |

As described above, regarding the test cells of Practical example 1 to Practical example 6, the negative electrode contains the silicon-containing graphite particle as the negative electrode active material which is the graphite particle containing the silicon. The nonaqueous electrolytic solution contains the EC, the DMC, the EMC, the carboxylic acid ester whose carbon number is equal to or less than 4, and the FEC, as the nonaqueous solvent. When the sum of the EC, the DMC, the EMC, and the carboxylic acid ester is treated as 100 volume%, the volume of the carboxylic acid ester is 1 volume% to 30 volume%. The content amount of the FEC with respect to the whole of the nonaqueous solvent is 0.1 mass% to 5 mass%. From the results shown in Table 2, it was found that, according to the configuration described above, the increase in the resistance under the low temperature environment could be better suppressed on the electricity storage device in which the particle containing the silicon as the negative electrode active material was used.

The herein disclosed technique can include the techniques recited in items described below.

### Item 1:

An electricity storage device, comprising: a positive electrode; a negative electrode; and a nonaqueous electrolytic solution, wherein
the negative electrode contains a silicon-containing graphite particle as a negative electrode active material, the silicon-containing graphite particle being a graphite particle that contains a silicon,
the nonaqueous electrolytic solution contains an ethylene carbonate, a dimethyl carbonate, an ethyl methyl carbonate, a carboxylic acid ester whose carbon number is equal to or less than 4, and a fluoroethylene carbonate, as a nonaqueous solvent,
a volume rate of the carboxylic acid ester is 1 volume% to 30 volume%, with a sum of the ethylene carbonate, the dimethyl carbonate, the ethyl methyl carbonate, and the carboxylic acid ester being 100 volume%, and
a content amount of the fluoroethylene carbonate with respect to a whole of the nonaqueous solvent is equal to or more than 0.1 mass% and not more than 5 mass%.

### Item 2:

The electricity storage device recited in Item 1, wherein
the carboxylic acid ester is at least one of a methyl acetate and a methyl propanoate.

### Item 3:

The electricity storage device recited in Item 1 or 2, wherein
with a sum of the ethylene carbonate, the dimethyl carbonate, the ethyl methyl carbonate, and the carboxylic acid ester being 100 volume%,
a volume rate of a sum of the ethylene carbonate and the dimethyl carbonate is equal to or more than 50 volume%, and
a volume rate of the ethyl methyl carbonate is equal to or more than 10 volume% and not more than 40 volume%.

### Item 4:

The electricity storage device recited in any one of Items 1 to 3, wherein
the silicon-containing graphite particle contains a graphite particle including a void and a silicon-containing particle being arranged at an inside of the void.

### Item 5:

The electricity storage device recited in any one of Items 1 to 4, wherein
a particle diameter of the silicon-containing particle is equal to or less than 1 µm.

### Item 6:

The electricity storage device recited in any one of Items 1 to 5, further comprising:
a graphite particle as the negative electrode active material in which the silicon is substantially not contained.

As described above, the embodiments of the herein disclosed technique have been explained, but these are merely illustrations, and thus these are not to restrict the scope of claims. The technique recited in claims contains matters in which the above-illustrated specific example is variously deformed or changed.

## Claims

1. An electricity storage device (100), comprising:
a positive electrode (50);
a negative electrode (60); and
a nonaqueous electrolytic solution (80), wherein
the negative electrode (60) contains a silicon-containing graphite particle as a negative electrode active material, the silicon-containing graphite particle being a graphite particle that contains a silicon,
the nonaqueous electrolytic solution (80) contains an ethylene carbonate, a dimethyl carbonate, an ethyl methyl carbonate, a carboxylic acid ester whose carbon number is equal to or less than 4, and a fluoroethylene carbonate, as a nonaqueous solvent,
a volume rate of the carboxylic acid ester is 1 volume% to 30 volume%, with a sum of the ethylene carbonate, the dimethyl carbonate, the ethyl methyl carbonate, and the carboxylic acid ester being 100 volume%, and
a content amount of the fluoroethylene carbonate with respect to a whole of the nonaqueous solvent is equal to or more than 0.1 mass% and not more than 5 mass%.

2. The electricity storage device (100) according to claim 1, wherein
the carboxylic acid ester is at least one of a methyl acetate and a methyl propanoate.

3. The electricity storage device (100) according to claim 1 or 2, wherein
with a sum of the ethylene carbonate, the dimethyl carbonate, the ethyl methyl carbonate, and the carboxylic acid ester being 100 volume%,
a volume rate of a sum of the ethylene carbonate and the dimethyl carbonate is equal to or more than 50 volume%, and
a volume rate of the ethyl methyl carbonate is equal to or more than 10 volume% and not more than 40 volume%.

4. The electricity storage device (100) according to claim 1 or 2, wherein
the silicon-containing graphite particle contains a graphite particle including a void and a silicon-containing particle being arranged at an inside of the void.

5. The electricity storage device (100) according to claim 1 or 2, wherein
a particle diameter of the silicon-containing particle is equal to or less than 1 µm.

6. The electricity storage device (100) according to claim 1 or 2, further comprising:
a graphite particle as the negative electrode active material in which the silicon is substantially not contained.
